# EUROPEAN PATENT SPECIFICATION

(11) **EP 2 145 939 B1**
(45) Date of publication and mention of the grant of the patent: **12.03.2014**
(21) Application number: 08761449.1
(22) Date of filing: 03.04.2008
(51) Int. Cl.: C10J 3/20, C10J 3/26, C10J 3/40, F23B 30/02, F23G 5/36, C10K 1/04, F02B 43/08

(54) **ELECTRIC AND THERMAL GENERATION PLANT USING BIOMASS GASIFICATION**
STROM- UND WÄRMEERZEUGUNGSANLAGE MIT BIOMASSEN-GASIFIZIERUNG
INSTALLATION DE PRODUCTION ÉLECTRIQUE ET THERMIQUE À PARTIR DE LA GAZÉIFICATION DE BIOMASSE

(30) Priority: 03.04.2007 ES 200700879
(43) Date of publication of application: 20.01.2010
(73) Proprietor: Fundación Cidaut, 47151 Boecillo (ES)
(72) Inventor: HORRILLO GÜEMES, Alfonso, E-47151 Boecillo (valladolid) (ES); MELGAR BACHILLER, Andrés, E-47151 Boecillo (valladolid) (ES); TINAUT FLUIXÁ, Francisco V., E-47151 Boecillo (valladolid) (ES); LEDESMA LEDESMA, Jaime, E-47151 Boecillo (valladolid) (ES); NIETO DE LA FUENTE, Luis, Antonio, E-47151 Boecillo (valladolid) (ES); FERNÁNDEZ GÓMEZ, Laura, E-47151 Boecillo (valladolid) (ES); MANSILLA CUESTA, Oscar, E-47151 Boecillo (valladolid) (ES); DÍEZ DE LA ROSA, Ana, E-47151 Boecillo (valladolid) (ES); GAMAZO GAMAZO, Anibal, E-47151 Boecillo (valladolid) (ES); MARTÍN VARONA, Eva, María, E-47151 Boecillo (valladolid) (ES)
(74) Representative: Carpintero Lopez, Francisco
(86) International application number: PCT/ES2008/000201
(87) International publication number: WO 2008/119859

(56) References cited:
- WO-A1-81/03374
- WO-A2-2007/002844
- DE-A1- 3 411 822
- ES-A1- 2 086 262
- ES-A1- 2 190 689
- ES-A1- 2 206 056
- ES-U- 285 736
- GB-A- 2 030 273

## Description

### Object of the Invention

The present invention relates to a plant for transforming biomass, especially lignocellulosic waste, into producer gas, to be exploited as a fuel, after it is conditioned and cleaned, in an electrical energy generation system formed by internal combustion engines with alternator coupling.

### Background of the Invention

Biomass is solar energy converted by vegetation into organic matter; this energy can be recovered by means of its direct combustion or transforming it into other fuels. Biomass with a plant origin (wood waste, pruning waste, plant material from energy crops, etc.), and biomass with an animal origin (livestock raising waste such as purines, manure, etc.) can be referred to.

Gasification is the thermochemical transformation of a solid into a fuel gas, it being usual to obtain it by means of an incomplete combustion process taking place in reactors called gasifiers or gas generators. They can be classified according to the internal bed of the reactor into fixed or supported bed gasifiers and into fluid or fluidized bed gasifiers, according to the direction of the flows into updraft, downdraft and cross-flow gasifiers, they can also be classified into open gasifiers, suitable for continuous operation, and closed gasifiers, suitable for batch operations.

In particular, a fixed bed downdraft reactor is suitable for obtaining producer gas with a low tar concentration, which is suitable for gasification plants with subsequent electric exploitation operating with reduced amounts of biomass in comparison with installations with fluidized bed gasification.

Four process areas can be longitudinally distinguished in a reactor of this type:
1- biomass drying area.
2- biomass pyrolysis area
3- exothermic oxidation area.
4- endothermic reduction area.

Patent US4584947 describes a fixed bed downdraft reactor, open at the upper part through which solid fuel is fed for its continuous operation, in which the oxidizing agent is fed through differentiated areas. The oxidizing agent has long been commonly fed through differentiated areas of the reactor such as the upper part together with lower areas corresponding to the combustion or oxidation area, as is shown for example in patents US1821263, US2204902, US3746521. Other background references with respect to gasification plants, equipment or processes are those described in patents: FR634399, FR642344, US3639111, FR2290488, EP0040265, US4459136, EP0101143, US4497637, FR2574423 and US4592762. In DE 3411822, a fixed bed downdraft gasifier is described with different sectors and a conical configuration.

The following patents must also be emphasized: ES2136477, ES2183662, ES2190689, ES2182608, ES2199612, ES2206056 belonging to the state of the art relating to gasification reactors and/or plants.

An essential aspect when using the producer gas generated in gasification plants with subsequent energy exploitation is its conditioning in order to be suitably used in combustion equipment. In the case of energy exploitation of the gas in combustion engines, it involves eliminating particles, tars and other impurities which can damage the good operation of the engines. There are several systems used in this sense such as cyclones, electrostatic filters, bag filters, droplet separators and/or cooling of the gas in heat exchange systems with water, scrubbers, as well as activated carbon filters.

The energy exploitation of the producer gas can be carried out in gas turbine or steam boiler-steam turbine systems, which systems are suitable for gasification and energy exploitation of large amounts of biomass, or in a combustion engine-alternator system, which is more suitable for more reduced amounts of biomass. In this sense, the efficient use of a combustion engine-alternator system involves the availability of a suitable control of its operating capacity.

### Description of the Invention

The present invention describes an electrical and thermal energy generation plant using biomass, especially lignocellulosic waste, gasification, which allows an optimal and simple transformation of the solid fuel into a clean and cold producer gas used as a fuel feeding a base of internal combustion engines-alternators for generating electrical energy.

According to a first object of the invention, the electrical and thermal energy generation plant comprises a bearing platform which is easy to transport and install and on which at least the following equipment is assembled and controlled in a coordinated manner:
- a fixed bed downdraft gasification reactor fed by biomass for obtaining a producer gas,
- a producer gas conditioning system located after the gasification reactor for its use as a fuel in internal combustion engines,
- internal combustion engines-alternators adapted for their operation with the producer gas as the only fuel for generating electrical and thermal energy.

It is preferably contemplated that the producer gas conditioning system comprises:
- a cyclone for separating particles of the producer gas produced in the gasifier,
- two similar cooling-condensation-filtration circuits for filtering and cooling the producer gas and obtaining a clean gas at a suitable temperature for feeding the internal combustion engines,
- a selection valve regulating the passage of the producer gas from the cyclone for its introduction in one or in both cooling-condensation-filtration circuits. The use of two circuits prevents the need to stop the operation of the plant in a maintenance operation or the like.

The plant additionally incorporates a heat exchanger provided with a first inlet through which condensates separated from the producer gas in the cooling-condensation-filtration circuits circulate, a second inlet through which the exhaust gases of the internal combustion engines heating these condensates penetrate, a first outlet through which the hot condensates exit for their recirculation to the gasification reactor as a secondary oxidizing agent and a second outlet through which the cold exhaust gases of the internal combustion engines exit.

A second object of the invention relates to the biomass gasification reactor which can be used in the described gasification plant. The gasification reactor is a fixed bed downdraft type reactor having a first cylindrical upper sector through which biomass is fed and circulated in which the pre-heating and drying thereof as well as part of the pyrolysis occurs. Then and according to the invention, the gasification reactor incorporates a second sector with a conical configuration of divergent lower orientation of refractory material in which the final operation of pyrolysis, oxidation and part of the reduction occurs homogeneously for different gas flow rates.

This conical configuration of divergent lower orientation facilitates, unlike the conventional solution of having a cylindrical sector, a homogenization occurring in the distribution of air and the flame remaining virtually constantly in the same place.

This solution is especially satisfactory in the event that different types of biomass with different heat capacities and therefore with a tendency to cause variations in the flow rate in the reactor are used, since the expansion occurring in the passage from the cylindrical section to the conical section of divergent lower orientation allows absorbing possible variations that may be generated in the combustion process, facilitating this homogeneity in the distribution of air and the constant position, as well as the position of the flame.

After the second sector the gasification reactor has a third sector with a conical configuration of convergent lower orientation in which the reduction is finished and a carbon reserve is established to be used in the event that variations in flow rate occur.

Then there is a fourth sector or lower sector in which there is a grate supporting the bed and which is configured by:
- two opposite slatted plates which are slightly separated from one another at one of their sides and which are tilting with respect to their opposite sides, and
- a preferably motor-driven shaking mechanism, integrated in the slatted plates, which is provided with a tilting movement about its central axis regulating the accumulation and fall of the ash.

The shaking mechanism is formed by a central profile on which the opposite sides of the slatted plates are supported, from which a plurality of parallel flanges emerges on both sides, which flanges are located in correspondence with the free spaces of the slatted plates, covering said free spaces in the position in which they support the ash and exposing them by their tilting movement to facilitate the fall of the ash.

The extraction of ash from the gasifier and its loss of load are controlled with this shaking mechanism, ensuring at all times suitable and homogeneous conditions of flow rate and of composition of the generated gas.

The plant generally operates in depression to prevent leakages and to lead the fuel producer gas towards the combustion engines-alternators, incorporating for that purpose a suction-drive blower before the engines. In the feed of each engine it has an electrically-operated safety valve before each regulating throttle valve.

According to what is described, the gasification plant allows continuously obtaining a hot fuel gas with a calorific value greater than 4300 KJ/m³N and low tar concentration.

On the other hand, the internal combustion engines-alternators are adapted for the operation with this producer gas with an efficiency greater than 20% and very low fuel and pollutant gas emission to the atmosphere.

### Description of the Drawings

To complement the description which is being made and with the aim of aiding to better understand the features of the invention according to a preferred practical embodiment thereof, a set of drawings is attached as an integral part of said description in which the following has been depicted with an illustrative and non-limiting character:
Figure 1 shows a block diagram of the process carried out by the electrical and thermal energy generation plant using biomass gasification.
Figure 2 shows a perspective view of the grate with the shaking mechanism rotated.
Figure 3 shows an elevational view of the grate with the slatted plates and the shaking mechanism in a horizontal position.
Figure 4 shows an elevational view of the grate, depicting the position of the shaking mechanism rotated, as well as one of the slatted plates likewise rotated by the action of the mechanism for facilitating the fall of the ash.

### Preferred Embodiment of the Invention

A preferred embodiment of the objects of the present invention is described based on the figures.

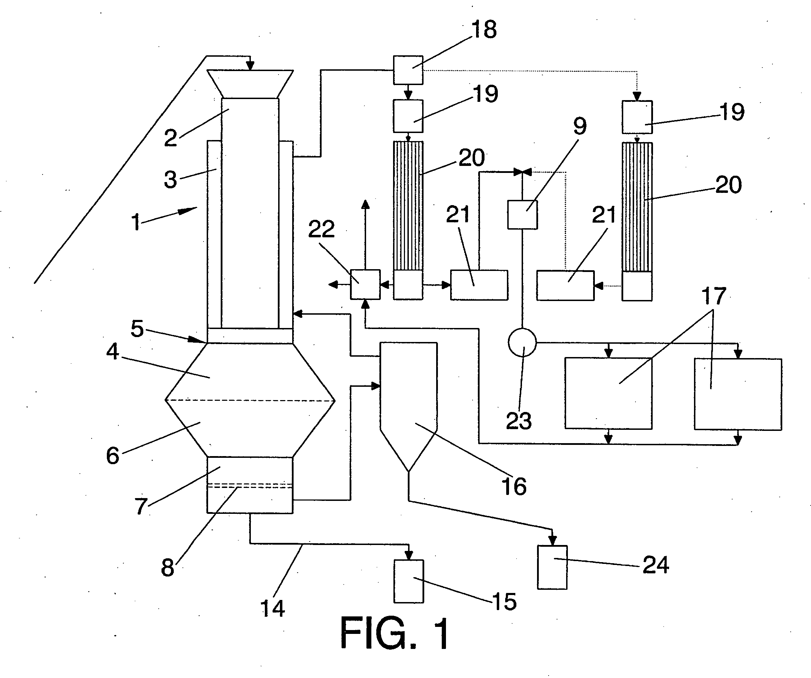

According to Figure 1, the gasification reactor (1) according to the invention essentially comprises:
- A first cylindrical upper sector (2), through which the biomass is fed and circulated, in which the pre-heating of the latter and part of the pyrolysis occurs, having an annular space (3) through which there circulates the exhaust gas resulting from the gasification occurring in the gasification reactor (1), pre-heating the biomass before its exit,
- a second sector (4) with a conical configuration of divergent lower orientation of refractory material in which the final area of pyrolysis, oxidation and part of the reduction occurs,
- a perimetric external air inlet (5), located between the first sector (2) and the second sector (4) through which air is introduced into the gasification reactor (1),

- a third sector (6) with a conical configuration of convergent lower orientation located after the second sector (4) in which the reduction is finished and a carbon reserve is established to be used in the event that variations in flow rate occur,
- a fourth sector (7) located after the third sector (6), in which there is located a grate (8) supporting the bed, having an outlet for discharging final ash and cinders from the gasification.

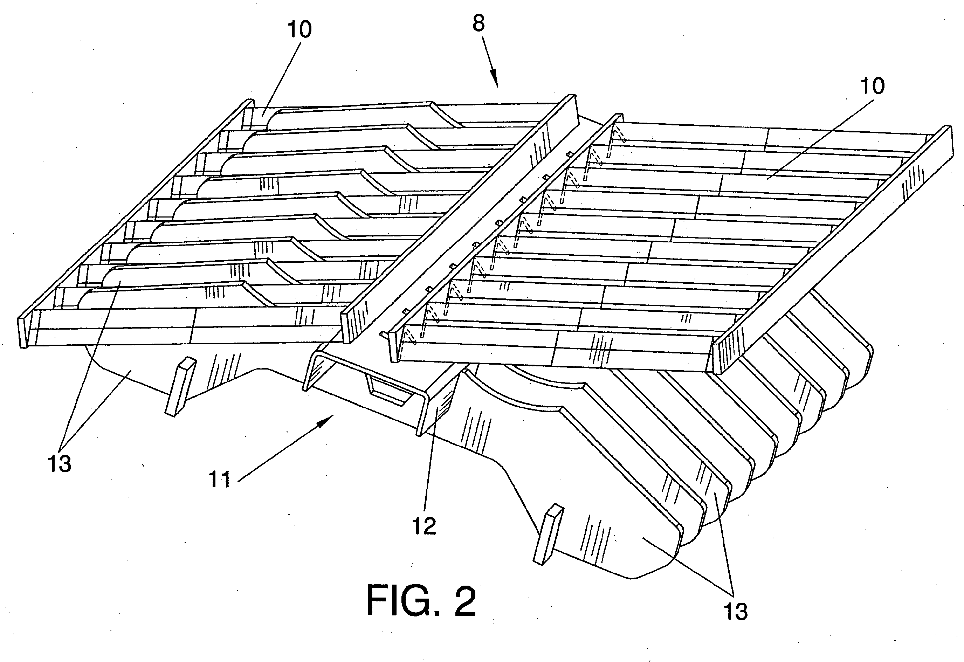

The bed formed in-process by the biomass is supported by the grate (8), depicted in Figures 2 to 4, which is configured by two opposite slatted plates (10), which are slightly separated from one another at one of their sides and which are tilting with respect to their opposite sides, and by a shaking mechanism (11) which is provided with a tilting movement, preferably motor-driven, about its intermediate axis.

The shaking mechanism (11) is formed by a central profile (12) on which the opposite sides of the slatted plates (10) are supported, from which a plurality of parallel flanges (13) emerges on both sides, which flanges are located in correspondence with the free spaces of the slatted plates (10).

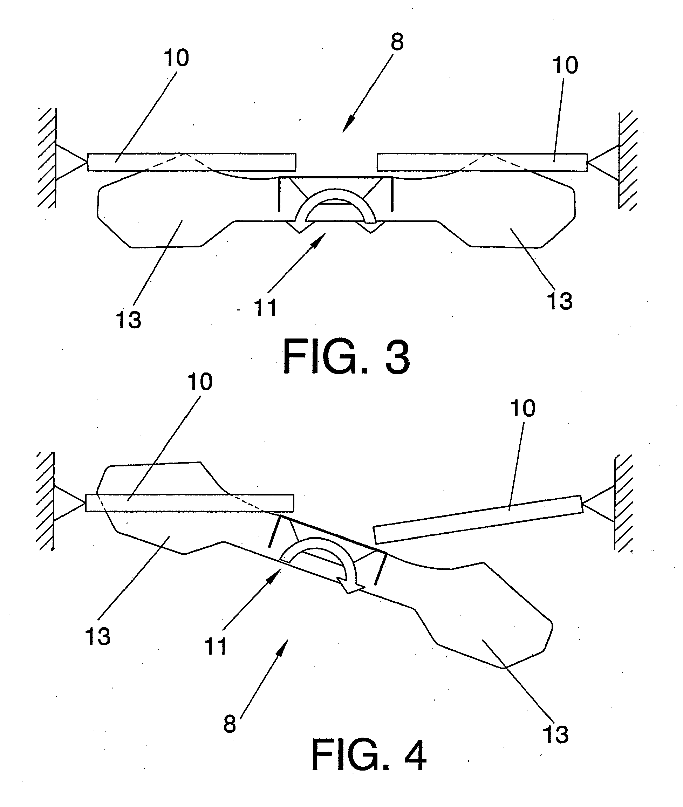

The internal bed is supported by means of this grate (8), with the slatted plates (10) in a horizontal position and the flanges (13) of the shaking mechanism (11) introduced in the slatted plates (10) to prevent the fall of the ash, a situation which is depicted in Figure 3. When part of the bed is to be dumped, the shaking mechanism (11) is rotated about its central axis, causing on one hand the rotation of the central profile (12) supporting the slatted plates (10) determining a slight downward tilt of one of the slatted plates (10), and on the other hand there is an upward movement of the group of flanges (13) located on one side of the central profile (12) and an upward movement of the group of flanges (13) located on the other side of the central profile (12), thus releasing the free spaces of the slatted plates (10) to allow the fall of the ash, as well as to reduce the loss of load held by the bed and maintain a suitable structure thereof without the presence of preferential paths.

The ash generated during gasification process is continuously discharged through the lower part of the gasification reactor, preferably by means of using a worm screw (14) arranged inside a stainless steel conduit dumping the ash to a hermetic collector (15).

The producer gas generated in the gasification reactor (1), mainly formed by carbon monoxide, hydrogen, carbon dioxide, nitrogen, methane, steam and traces of unburned volatile hydrocarbons, is led below the grate (8) to a cyclone (16) to separate the possible particles entrained with the gas stream, which are directed to a tank (24).

The particle-free gas from the cyclone (16) is again re-introduced in the gasification reactor (1) and is directed through the annular space (3) of the gasification reactor (1) in order to leave it through its upper part.

The gas is then directed to cooling-condensation-filtration circuits (19-20-21) for its filtration and cooling for the purpose of reaching the suitable temperature for feeding the internal combustion engines (17), previously incorporating a selection valve (18) which allows operating with either circuit (19-20-21) or with both simultaneously.

Each of the circuits (19-20-21) has a particle filter (19) based on filtration through a metal mesh and then there is an exchanging filter (20) consisting of a multitubular exchanger inside the tubes of which the gas which has previously passed through the particle filter (19) is introduced. Environmental air circulates as a coolant fluid in an upward direction outside the tubes of the exchanging filter (20), which air is driven by a ventilator cooling the gas, causing the condensation of steam and of traces of unburned condensable volatile hydrocarbons of the gas in the gasification reactor (1) which are entrained towards a heat exchanger (22).

The uncondensed fraction of producer gas is then directed towards a filter using a regenerable material bed (21).

The already cooled and clean producer gas from each of the circuits (19, 20, 21) converges in a valve (9) to feed the internal combustion engines (17), each of which is associated to an alternator for generating electrical energy.

The separate condensates of the producer gas from the exchanging filter (20) are recirculated to the gasification reactor (1) as a secondary oxidizing agent, after the vaporization in the mentioned heat exchanger (22), in which the exhaust gases of the internal combustion engines (17) of the plant are introduced as a heat-carrying fluid. The passage of the exhaust gases through this heat exchanger (22) allows cooling them, which gases are mostly formed by carbon dioxide, nitrogen and steam.

Before the internal combustion engines (17) the plant incorporates a suction-drive blower (23) which allows such plant to operate in depression to prevent leakages and lead the fuel producer gas towards the internal combustion engines (17).

## Claims

1. Fixed bed downdraft type biomass gasification reactor (1), having a first cylindrical upper sector (2) through which biomass is fed and circulated in which the pre-heating and drying thereof and part of the pyrolysis occurs, **characterized in that** it comprises after the first sector (2) a second sector (4) with a conical configuration of divergent lower orientation of refractory material in which the final operation of pyrolysis, oxidation and part of the reduction occurs homogeneously with any variation in gas flow and **in that** after the second sector (4) it comprises a third sector (6) with a conical configuration of convergent lower orientation in which the reduction is finished and a carbon reserve is established to be used in the event that variations in flow rate occur, and **in that** after the third sector (6) it comprises a fourth sector (7) in which there is a grate (8) supporting the bed and configured by two opposite slatted plates (10) which are slightly separated from one another at one of their sides and which are tilting with respect to their opposite sides, and by a shaking mechanism (11) integrated in the slatted plates (10) which is provided with a tilting movement about its central axis regulating the accumulation and fall of the ash.

2. Gasification reactor (1) according to claim 1, **characterized in that** the shaking mechanism is formed by a central profile (12) on which the opposite sides of the slatted plates (10) are supported, from which a plurality of parallel flanges (13) emerges on both sides, which flanges are located in correspondence with the free spaces of the slatted plates (10), covering said free spaces in the position in which they support the ash and exposing them by the tilting movement to facilitate the fall of the ash.

3. Electrical and thermal energy generation plant using biomass gasification, **characterized in that** it comprises a bearing platform which is easy to transport and install and on which at least the following equipment is assembled and controlled in a coordinated manner:
- a fixed bed downdraft type gasification biomass reactor (1) according to previous claims 1 and 2 for obtaining a producer,
- a producer gas conditioning system located after the gasification reactor for its use as a fuel in internal combustion engines (17),
- internal combustion engines (17), each of which is associated to an alternator, adapted for their operation with the producer gas as the only fuel for generating electrical and thermal energy.

4. Electrical and thermal energy generation plant using biomass gasification according to claim 3, **characterized in that** the gasification reactor consists of the gasification reactor (1) described in claims 1 to 4.

5. Electrical and thermal energy generation plant using biomass gasification according to claim 4, **characterized in that** the producer gas conditioning system comprises:
- a cyclone (16) for separating particles of the producer gas produced in the gasification reactor (1),
- two similar cooling-condensation-filtration circuits (19-20-21) for filtering and cooling the producer gas and obtaining a clean gas at a suitable temperature for feeding the internal combustion engines (17),
- a selection valve (18) regulating the passage of the producer gas from the cyclone (16) for its introduction in either cooling-condensation-filtration circuit (19-20-21) or in both.

6. Electrical and thermal energy generation plant using biomass gasification according to claim 5, **characterized in that** each of the cooling-condensation-filtration circuits (19-20-21) comprises:
- a metal mesh particle filter (19) located after the selection valve (18),
- an exchanging filter (20) arranged after the particle filter (19) in which the gas is cooled and divided into a condensate and an uncondensed fraction of producer gas,
- a regenerable material bed filter (21) located after the exchanging filter (20).

7. Electrical and thermal energy generation plant using biomass gasification according to claim 6, **characterized in that** it incorporates a heat exchanger (22) provided with:
- a first inlet through which condensates separated from the producer gas in the exchanging filter (20) circulate,
- a second inlet through which the exhaust gases of the internal combustion engines (17), heating the condensates, penetrate,
- a first outlet through which the hot condensates exit for their recirculation to the gasification reactor (1) as a secondary oxidizing agent, and
- a second outlet through which the cold exhaust gases of the internal combustion engines (17) exit.

8. Electrical and thermal energy generation plant using biomass gasification according to claim 3, **characterized in that** it incorporates a suction-drive blower (23) in an arrangement before the internal combustion engines (17) which maintains the plant in depression to prevent leakages and lead the fuel producer gas towards the internal combustion engines (17).

## Patentansprüche

1. Biomassengasifizierungsreaktor (1) vom Festbettfallstromtyp, mit einem ersten zylindrischen oberen Abschnitt (2), durch welchen Biomasse gespeist und zirkuliert wird, in welchem das Vorheizen und das Trocknen davon und ein Teil der Pyrolyse erfolgt, **dadurch gekennzeichnet, dass** er nach dem ersten Abschnitt (2) einen zweiten Abschnitt (4) aufweist, mit einer konischen Ausgestaltung mit divergenter unterer Ausrichtung aus feuerfestem Material, in dem der letzte Arbeitsvorgang aus Pyrolyse, Oxidation und ein Teil der Reduktion mit jeglicher Änderung der Gasströmung homogen abläuft und dass er nach dem zweiten Abschnitt (4) einen dritten Abschnitt (6) mit einer konischen Ausgestaltung mit konvergenter unterer Ausrichtung aufweist, in dem die Reduktion abgeschlossen und ein Kohlenstoffvorrat aufgebaut wird, um in dem Fall verwendet zu werden, dass Änderungen der Strömungsgeschwindigkeit auftreten, und dass er nach dem dritten Abschnitt (6) einen vierten Abschnitt (7) aufweist, in dem sich ein Gitter (8) befindet, welches das Bett trägt und durch zwei gegenüber liegende Leistenplatten (10), welche leicht voneinander an einer ihrer Seiten getrennt sind, und welche sich in Bezug auf ihre gegenüber liegende Seiten neigen, und durch einen Schüttelmechanismus (11), der in die Leistenplatten (10) integriert ist, der mit einer Neigebewegung um seine Zentralachse zum Regulieren der Ansammlung und Abnahme der Asche versehen ist, ausgebildet ist.

2. Gasifizierungsreaktor (1) nach Anspruch 1, **dadurch gekennzeichnet, dass** der Schüttelmechanismus durch ein Zentralprofil (12) gebildet wird, auf dem die gegenüber liegenden Seiten der Leistenplatten (10) getragen werden, von welchen eine Mehrzahl von parallelen Auslegern (13) auf beiden Seiten herausragt, wobei die Ausleger entsprechend der Freiräume der Leistenplatten (10) angeordnet sind und die Freiräume in der Position bedecken, in der sie die Asche tragen und diese durch die Neigebewegung freilegen, um die Abnahme der Asche zu erleichtern.

3. Strom- und Wärmeerzeugungsanlage mit Biomassengasifizierung, **dadurch gekennzeichnet, dass** sie eine Lagerplattform aufweist, die leicht zu transportieren und zu installieren ist, und auf welcher zumindest die folgende Ausrüstung zusammengebaut wird und auf eine koordinierte Weise gesteuert wird:
- einem Biomassengasifizierungsreaktor (1) vom Festbettfallstromtyp nach vorhergehenden Ansprüchen 1 und 2 zum Erhalten eines Erzeugers,
- einem Erzeugergasaufbereitungssystem, das nach dem Gasifizierungsreaktor für dessen Verwendung als ein Treibstoff in internen Verbrennungsmaschinen (17) angeordnet ist,
- internen Verbrennungsmaschinen (17), wobei jede davon mit einem Wechselstromgenerator verbunden ist, der für deren Betrieb mit dem Erzeugergas als der einzige Treibstoff zum Erzeugen von elektrischer und thermischer Energie angepasst ist.

4. Strom- und Wärmeerzeugungsanlage mit Biomassengasifizierung nach Anspruch 3, **dadurch gekennzeichnet, dass** der Gasifizierungsreaktor aus dem in den Ansprüchen 1 bis 3 beschriebenen Gasifizierungsreaktor (1) besteht.

5. Strom- und Wärmeerzeugungsanlage mit Biomassengasifizierung nach Anspruch 4, **dadurch gekennzeichnet, dass** das Erzeugergasaufbereitungssystem aufweist:
- einen Zyklon (16) zum Abtrennen von Teilchen des Erzeugergases, die in dem Gasifizierungsreaktor (1) erzeugt wurden,
- zwei ähnliche Kühl-Kondensation-Filtration-Kreisläufe (19-20-21) zum Filtern und Kühlen des Erzeugergases und Erhalten eines reinen Gases bei einer geeigneten Temperatur zum Bespeisen der internen Verbrennungsmaschinen (17),
- ein Auswahlventil (18), das den Durchgang des Erzeugergases von dem Zyklon (16) für dessen Einleitung in einen der Kühl-Kondensation-Filtration-Kreisläufe (19-20-21) oder in beide reguliert.

6. Strom- und Wärmeerzeugungsanlage mit Biomassengasifizierung nach Anspruch 5, **dadurch gekennzeichnet, dass** jeder der Kühl-Kondensation-Filtration-Kreisläufe (19-20-21) aufweist:
- einen Metallnetzteilchenfilter (19), der nach dem Auswahlventil (18) angeordnet ist,
- einen Austauschfilter (20), der nach dem Teilchenfilter (19) angeordnet ist, in welchem das Gas gekühlt wird und in ein Kondensat und einen unkondensierten Anteil an Erzeugergas aufgeteilt wird,
- einen Bettfilter (21) aus erneuerbarem Material, der nach dem Austauschfilter (20) angeordnet ist.

7. Strom- und Wärmeerzeugungsanlage mit Biomassengasifizierung nach Anspruch 6, **dadurch gekennzeichnet, dass** sie einen Wärmetauscher (22) enthält, der versehen ist mit:
- einem ersten Einlass, durch welchen Kondensate zirkulieren, die von dem Erzeugergas in dem Austauschfilter (20) abgetrennt wurden,
- einem zweiten Einlass, durch welchen die Abgase der internen Verbrennungsmaschinen (17), welche die Kondensate erwärmen, eindringen,
- einem ersten Auslass, durch welchen die heißen Kondensate für ihre Rezirkulation zu dem Gasifizierungsreaktor (1) als ein sekundäres Oxidationsmittel austreten, und
- einem zweiten Auslass, durch welchen die kalten Abgase der internen Verbrennungsmaschinen (17) austreten.

8. Strom- und Wärmeerzeugungsanlage mit Biomassengasifizierung nach Anspruch 3, **dadurch gekennzeichnet, dass** sie ein Saugantriebgebläse (23) in eine Anordnung vor den internen Verbrennungsmaschinen (17) enthält, das die Anlage im Unterdruck hält, um Leckagen zu verhindern und das Treibstofferzeugergas in Richtung der internen Verbrennungsmaschinen (17) zu leiten.

## Revendications

1. Réacteur de gazéification à lit fixe de biomasse de type inversé (1), ayant un premier secteur supérieur cylindrique (2) à travers lequel la biomasse est amenée et mise en circulation, dans lequel son préchauffage et son séchage et une partie de la pyrolyse se produisent, **caractérisé en ce qu'**il comprend, après le premier secteur (2), un deuxième secteur (4) avec une configuration conique d'orientation inférieure divergente de matériau réfractaire dans laquelle l'opération finale de pyrolyse, d'oxydation et une partie de la réduction se produit de manière homogène avec une variation dans l'écoulement de gaz et **en ce que**, après le deuxième secteur (4), il comprend un troisième secteur (6) avec une configuration conique d'orientation inférieure convergente dans laquelle la réduction se termine et une réserve de carbone est établie pour être utilisée en cas de variations de débit, et **en ce que**, après le troisième secteur (6), il comprend un quatrième secteur (7) dans lequel il y a une grille (8) supportant le lit et configurée par deux plaques à claire-voie opposées (10) qui sont légèrement séparées l'une de l'autre au niveau de l'un de leurs côtés et qui s'inclinent par rapport à leurs côtés opposés, et par un mécanisme de secouage (11) intégré dans les plaques claire-voie (10) qui est prévu avec un mouvement d'inclinaison autour de son axe central régulant l'accumulation et la chute de cendre.

2. Réacteur de gazéification (1) selon la revendication 1, **caractérisé en ce que** le mécanisme de secouage est formé par un profil central (12) sur lequel les côtés opposés des plaques à claire-voie (10) sont supportés, à partir duquel une pluralité de brides parallèles (13) sortent des deux côtés, lesquelles brides sont positionnées en correspondance avec les espaces libres des plaques à claire-voie (10), recouvrant lesdits espaces libres dans la position dans laquelle ils supportent la cendre et les exposant par le mouvement d'inclinaison afin de faciliter la chute de la cendre.

3. Installation de production d'énergie électrique et thermique utilisant la gazéification de biomasse, **caractérisée en ce qu'**elle comprend une plateforme de support qui est facile à transporter et à installer et sur laquelle au moins l'équipement suivant est assemblé et commandé d'une manière coordonnée :
un réacteur de gazéification à lit fixe de biomasse de type inversé (1) selon les revendications précédentes 1 et 2, pour obtenir un gaz de gazogène,
un système de conditionnement de gaz de gazogène positionné après le réacteur de gazéification destiné à être utilisé en tant que combustible dans des moteurs à combustion interne (17),
des moteurs à combustion interne (17), dont chacun est associé à un alternateur, adaptés pour leur fonctionnement avec un gaz de gazogène en tant que combustible unique pour générer l'énergie électrique et thermique.

4. Installation de production d'énergie électrique et thermique utilisant la gazéification de biomasse selon la revendication 3, **caractérisée en ce que** le réacteur de gazéification se compose du réacteur de gazéification (1) décrit dans les revendications 1 à 4.

5. Installation de production d'énergie électrique et thermique utilisant la gazéification de biomasse selon la revendication 4, **caractérisée en ce que** le système de conditionnement de gaz de gazogène comprend :
un cyclone (16) pour séparer des particules du gaz de gazogène produit dans le réacteur de gazéification (1) ;
deux circuits de refroidissement-condensation-filtration similaires (19-20-21) pour filtrer et refroidir le gaz de gazogène et obtenir un gaz propre à une température appropriée pour alimenter les moteurs à combustion interne (17),
une valve de sélection (18) régulant le passage du gaz de gazogène depuis le cyclone (16) pour son introduction dans le circuit de refroidissement-condensation-filtration (19-20-21) ou les deux.

6. Installation de production d'énergie électrique et thermique utilisant la gazéification de biomasse selon la revendication 5, **caractérisée en ce que** chacun des circuits de refroidissement-condensation-filtration (19-20-21) comprend :
un filtre à particules à mailles métalliques (19) positionné après la valve de sélection (18),
un filtre d'échange (20) agencé après le filtre à particules (19) dans lequel le gaz est refroidi et divisé en un condensat et une partie non condensée de gaz de gazogène,
un filtre de lit de matériau régénérable (21) positionné après le filtre d'échange (20).

7. Installation de production d'énergie électrique et thermique utilisant la gazéification de biomasse selon la revendication 6, **caractérisée en ce qu'**elle comprend un échangeur de chaleur (22) doté d' :
une première entrée à travers laquelle les condensats séparés du gaz de gazogène dans le filtre d'échange (20) circulent,
une seconde entrée à travers laquelle pénètrent les gaz d'échappement des moteurs à combustion interne (17), chauffant les condensats,
une première sortie à travers laquelle les condensats chauds sortent pour leur recirculation jusqu'au réacteur de gazéification (1) en tant agent d'oxydation secondaire, et
une seconde sortie à travers laquelle les gaz d'échappement froids des moteurs à combustion interne (17) sortent.

8. Installation de production d'énergie électrique et thermique utilisant la gazéification de biomasse selon la revendication 3, **caractérisée en ce qu'**elle comprend une soufflante entraînée par aspiration (23) dans un agencement avant les moteurs à combustion interne (17), qui maintient l'installation en dépression pour empêcher les fuites et amener le gaz de gazogène combustible vers les moteurs à combustion interne (17).
